# EUROPEAN PATENT APPLICATION

(11) **EP 3 413 538 A1**
(43) Date of publication of application: **12.12.2018**
(21) Application number: 17746803.0
(22) Date of filing: 20.01.2017
(51) Int. Cl.: H04L 29/08, G06F 3/06

(54) **STORAGE SYSTEM**

(30) Priority: 03.02.2016 CN 201610076422
(71) Applicant: Beijing Sursen International Information Technology Co., Ltd., Beijing 100029 (CN); Surcloud Corp., Union, California 94587 (US)
(72) Inventor: WANG, Donglin, Beijing 100029 (CN); JIN, Youbing, Beijing 100029 (CN); QI, Yu, Beijing 100029 (CN)
(74) Representative: Hanna Moore + Curley
(86) International application number: PCT/CN2017/071830
(87) International publication number: WO 2017/133483

(57) **Abstract**

The embodiments of the present invention relate to a storage system comprising: a storage network; at least two storage nodes, connected to the storage network; and at least one storage device, connected to the storage network, each storage device comprising at least one storage medium; wherein, the storage network is configured to enable each storage node to access all the storage mediums without passing through other storage nodes. According to the embodiments of the present invention, a storage system in which there is no need to physically move data when rebalancing is required is provided.

## Description

### TECHNICAL FIELD

Embodiments of the present invention relate to the technical field of data storage systems, and more specifically, to a storage system.

### BACKGROUND

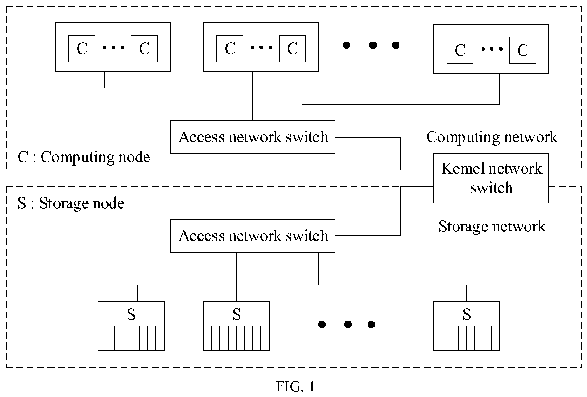

With increasing scale of computer applications, a demand for storage space is also growing. Accordingly, integrating storage resources of multiple devices (e.g., storage mediums of disk groups) as one storage pool to provide storage services has become a current mainstream. A conventional distributed storage system is usually composed of a plurality of storage nodes connected by a TCP/IP network. Fig.1 shows an architectural schematic diagram of a conventional storage system provided by prior art. As shown in Fig. 1, in a conventional storage system, each storage node S is connected to a TCP/IP network via an access network switch (such as a kernel network switch). Each storage node is a separate physical server, and each server has its own storage mediums. These storage nodes are connected with each other through a storage network, such as an IP network, to form a storage pool.

On the other side, each computing node is also connected to the TCP/IP network via the access network switch (such as a kernel network switch), to access the entire storage pool through the TCP/IP network. Access efficiency in this way is low.

However, what is more important is that, in the conventional storage system, once rebalancing is required, data of the storage nodes have to be physically moved.

### SUMMARY

In view of this, the embodiments of the present invention aim at providing a storage system in which there is no need to physically move data when the rebalancing is required.

According to an embodiment of the present invention, a storage system is provided. The storage system including:
a storage network;
at least two storage nodes, connected to the storage network; and
at least one storage device, connected to the storage network, each storage device including at least one storage medium;
wherein, the storage network is configured to enable each storage node to access all the storage mediums without passing through other storage node.

The storage system provided by the embodiments of the present invention provides a storage pool that supports multi-nodes control and global access, has excellent scalability and high availability, can achieve large capacity by increasing the number of the storage mediums, and improves reliability against a single point of failure in the storage nodes.

### BRIEF DESCRIPTION OF DRAWINGS

Fig. 1 shows an architectural schematic diagram of a storage system provided by the prior art;
Fig. 2 shows an architectural schematic diagram of a specific storage system constructed according to an embodiment of the present invention;
Fig. 3 shows an architectural schematic diagram of a storage system according to an embodiment of the present invention.

### DETAILED DESCRIPTION

The present invention will be described more fully hereinafter with reference to the accompanying drawings, in which the embodiments of the present invention are shown. These embodiments can, however, be embodied in many different forms and should not be construed as being limited to the embodiments set forth herein. Rather, these embodiments are provided so that the present invention is thorough and complete, and fully convey scope of the present invention to those skilled in the art.

The various embodiments of the present invention are described in detail in the following examples by combining with the accompanying drawings.

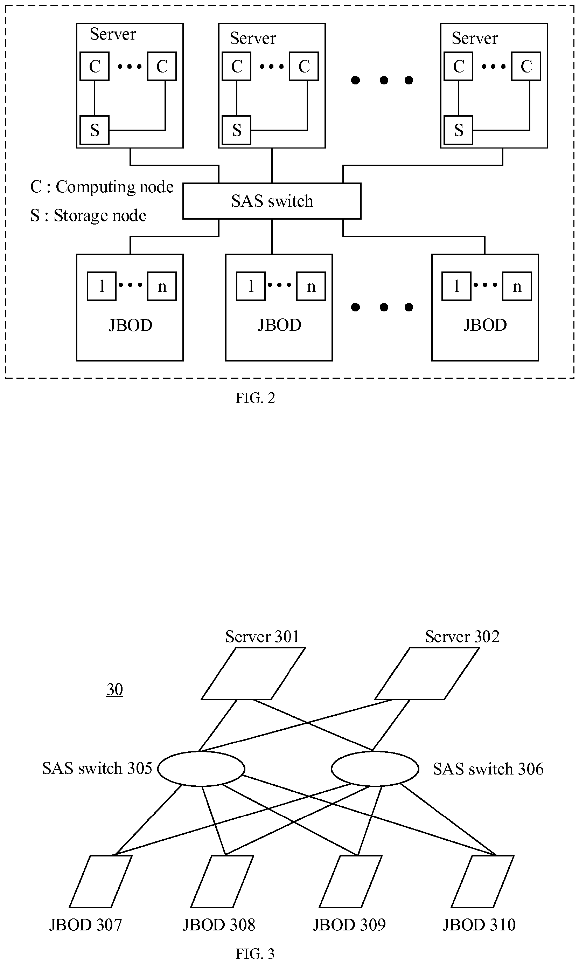

Fig. 2 shows an architectural schematic diagram of a storage system according to an embodiment of the present invention. As shown in Fig. 2, the storage system includes a storage network, storage nodes connected to the storage network, and storage devices also connected to the storage network. Each storage device includes at least one storage medium. For example, a storage device commonly used by the inventor may include 45 storage mediums. Wherein, the storage network is configured to enable each storage node to access all the storage mediums without passing through other storage node.

In the storage system provided by the embodiments of the present invention, each storage node can access all the storage mediums without passing through other storage node, so that all the storage mediums are actually shared by all the storage nodes, and therefore a global storage pool is achieved.

At the same time, compared with the prior art, which the storage node is located on the storage-medium-side, or strictly speaking, the storage medium is a built-in disk of a physical device where the storage node is located; in the embodiments of the present invention, the physical device where the storage node is located, is independent of the storage device, and the storage device is mainly used as a channel to connect the storage medium to the storage network.

In this way, there is no need to physically move data between different storage mediums when the rebalancing is required, as long as the storage mediums managed by different storage nodes are configured to be balanced.

In another embodiment of the present invention, the storage-node-side further includes a computing node, and the computing node and the storage node are located in same physical server connected with the storage devices via the storage network. By using the converged storage system in which the computing node and the storage node are located in same physical device provided by the embodiments of the present invention, the number of physical devices required can be reduced from the point of view of whole system, and thereby the cost is reduced. At the same time, the computing node can locally access any storage resource that they want to access. In addition, since the computing node and the storage node are converged in same physical server, data exchanging between the two can be as simple as memory sharing, so the performance is particularly excellent.

In a storage system provided by an embodiment of the present invention, the I/O (input/output) data path between the computing node and the storage medium includes: (1) the path from the storage medium to the storage node; and (2) the path from the storage node to the computing node located in one same physical server with the storage node (CPU bus). However, in comparison, in the storage system provided by the prior art as shown in FIG. 1, the I/O data path between the computing node and the storage medium includes: (1) the path from the storage medium to the storage node; (2) the path from the storage node to the access network switch of the storage network; (3) the path from the access network switch of the storage network to the kernel network switch; (4) the path from the kernel network switch to the access network switch of the computing network; and (5) the path from the access network switch of the computing network to the computing node. It is apparent that the total data path of the storage system provided by the embodiments of the present invention is only close to item (1) of the conventional storage system. Therefore, the storage system provided by the embodiments of the present invention can greatly compress the data path, so that I/O channel performance of the storage system can be greatly improved, and the actual operation effect is very close to reading or writing an I/O channel of a local hard disk.

In an embodiment of the present invention, the storage node may be a virtual machine of a physical server, a container or a module running directly on a physical operating system of the server, and the computing node may also be a virtual machine of the same physical server, a container, or a module running directly on a physical operating system of the server. In an embodiment of the present invention, each storage node may correspond to one or more computing nodes.

Specifically, one physical server may be divided into multiple virtual machines, wherein one of the virtual machines may be used as the storage node, and the other virtual machines may be used as the computing nodes; or, in order to achieve a better performance, one module of the physical OS (operating system) may be used as the storage node.

In an embodiment of the present invention, the virtual machine may be built through one of following virtualization technologies: KVM, Zen, VMware and Hyper-V, and the container may be built through one of following container technologies: Docker, Rockett, Odin, Chef, LXC, Vagrant, Ansible, Zone, Jail and Hyper-V.

In an embodiment of the present invention, the storage nodes are only responsible for managing corresponding storage mediums respectively at the same time, and one storage medium cannot be simultaneously written by multiple storage nodes, so that data conflicts can be avoided. As a result each storage node can access the storage mediums managed by itself without passing through other storage nodes, and integrity of the data stored in the storage system can be ensured.

In an embodiment of the present invention, all the storage mediums in the system may be divided according to a storage logic, specifically, the storage pool of the entire system may be divided according to a logical storage hierarchy which includes storage areas, storage groups and storage blocks, wherein, the storage block is the smallest storage unit. In an embodiment of the present invention, the storage pool may be divided into at least two storage areas.

In an embodiment of the present invention, each storage area may be divided into at least one storage group. In a preferred embodiment, each storage area is divided into at least two storage groups.

In some embodiments of the present invention, the storage areas and the storage groups may be merged, so that one level may be omitted in the logical storage hierarchy.

In an embodiment of the present invention, each storage area (or storage group) may include at least one storage block, wherein the storage block may be one complete storage medium or a part of one storage medium. In order to build a redundant storage mode within the storage area, each storage area (or storage group) may include at least two storage blocks, when any one of the storage blocks fails, complete data stored can be calculated from the rest of the storage blocks in the storage area. The redundant storage mode may be a multi-copy mode, a redundant array of independent disks (RAID) mode, or an erasure code (erasure code) mode. In an embodiment of the present invention, the redundant storage mode may be built through a ZFS (zettabyte file system). In an embodiment of the present invention, in order to deal with hardware failures of the storage devices/storage mediums, the storage blocks included in each storage area (or storage group) may not be located in one same storage medium, even not be located in one same storage device. In an embodiment of the present invention, any two storage blocks included in same storage area (or storage group) may not be located in one same storage medium /storage device. In another embodiment of the present invention, in one storage area (or storage group), the number of the storage blocks located in same storage medium/storage device is preferably less than or equal to the fault tolerance level of the redundant storage. For example, when the redundant storage applies RAID5, the fault tolerance level is 1, so in one storage area (or storage group), the number of the storage blocks located in same storage medium/storage device is at most 1; for RAID6, the fault tolerance level of the redundant storage mode is 2, so in one storage area (or storage group), the number of the storage blocks located in same storage medium/storage device is at most 2.

In an embodiment of the present invention, each storage node can only read and write the storage areas managed by itself. In another embodiment of the present invention, since multiple storage nodes do not conflict with each other when read one same storage block but easily conflict with each other when write one same storage block, each storage node can only write the storage areas managed by itself but can read the storage areas managed by itself and the storage areas managed by the other storage nodes. Thus it can be seen that writing operations are local, but reading operations are global.

In an embodiment of the present invention, the storage system may further include a storage control node, which is connected to the storage network and adapted for determining the storage areas managed by each storage node. In another embodiment of the present invention, each storage node may include a storage allocation module, adapted for determining the storage areas managed by the storage node. The determining operation may be implemented through communication and coordination algorithms between the storage allocation modules included in each storage node, for example, the algorithms may be based on a principle of load balancing between the storage nodes.

In an embodiment of the present invention, when it is detected that a storage node fails, some or all of the other storage nodes may be configured to take over the storage areas previously managed by the failed storage node. For example, one of the other storage nodes may be configured to take over the storage areas previously managed by the failed storage node, or at least two of the other storage nodes may be configured to take over the storage areas previously managed by the failed storage node, wherein each storage node may be configured to take over a part of the storage areas previously managed by the failed storage node, for example the at least two of the other storage nodes may be configured to respectively take over different storage groups of the storage areas previously managed by the failed storage node.

In an embodiment of the present invention, the storage medium may include but is not limited to a hard disk, a flash storage, a SRAM (static random access memory), a DRAM (dynamic random access memory), a NVME (non-volatile memory express) or the like, and an access interface of the storage medium may include but is not limited to a SAS (serial attached SCSI) interface, a SATA (serial advanced technology attachment) interface, a PCI/e (peripheral component interface-express) interface, a DIMM (dual in-line memory module) interface, a NVMe (non-volatile memory express) interface, a SCSI (small computer systems interface), or an AHCI (advanced host controller interface).

In an embodiment of the present invention, the storage network may include at least one storage switching device, and the storage nodes access the storage mediums through data exchanging between the storage switching devices. Specifically, the storage nodes and the storage mediums are respectively connected to the storage switching device through a storage channel.

In an embodiment of the present invention, the storage switching device may be a SAS switch or a PCI/e switch, and correspondingly the storage channel may be a SAS (Serial Attached SCSI) channel, or a PCI/e channel.

Taking the SAS channel as an example, compared with a conventional storage solution based on an IP protocol, the storage solution based on the SAS switch has advantages of high performance, large bandwidth, a single device including a large number of disks and so on. When a host bus adapter (HBA) or a SAS interface on a server motherboard is used in combination, storage mediums provided by the SAS system can be easily accessed simultaneously by multiple connected servers.

Specifically, the SAS switch and the storage device are connected through a SAS cable, and the storage device and the storage medium are also connected by the SAS interface, for example, the SAS channel in the storage device is connected to each storage medium (a SAS switch chip may be set up inside the storage device). Because the bandwidth of the SAS network can reach 24Gb or 48Gb, which is dozens of times the bandwidth of the Gigabit Ethernet, and several times the bandwidth of the expensive 10-Gigabit Ethernet; at the same time, at the link layer, the SAS network has about an order of magnitude improvement over the IP network, and at the transport layer, a TCP connection is established with a three handshake and closed with a four handshake, so the overhead is high, and Delayed Acknowledgement mechanism and Slow Start mechanism of the TCP protocol may cause a 100-millisecond-level delay, however the delay caused by the SAS protocol is only a few tenths of that of the TCP protocol, so there is a greater improvement in performance. In summary, the SAS network offers significant advantages in terms of bandwidth and delay over the Ethernet-based TCP/IP network. Those skilled in the art can understand that the performance of the PCI/e channel can also be adapted to meet the needs of the system.

In an embodiment of the present invention, the storage network may include at least two storage switching devices, each of the storage nodes may be connected to any storage device through any storage switching device, and further connected with the storage mediums. When a storage switching device or a storage channel connected to a storage switching device fails, the storage nodes can read and write the data on the storage devices through the other storage switching devices.

In FIG. 3, a specific storage system 30 provided by an embodiment of the present invention is illustrated. The storage devices in the storage system 30 are constructed as multiple JBODs (Just a Bunch of Disks) 307-310, these JBODs are respectively connected with two SAS switches 305 and 306 via SAS cables, and the two SAS switches constitute the switching core of the storage network included in the storage system. A front end includes at least two servers 301 and 302, and each of the servers is connected with the two SAS switches 305 and 306 through a HBA device (not shown) or a SAS interface on the motherboard. There is a basic network connection between the servers for monitoring and communication. Each of the servers has a storage node that manages some or all of the disks in all the JBODs by using information obtained from SAS links. Specifically, the disks in the JBODs may be divided into different storage groups according to the storage areas, the storage groups, and the storage blocks described above. Each of the storage nodes manage one or more storage groups. When each of the storage groups applies the redundant storage mode, redundant storage metadata may be stored on the disks, so that the redundant storage mode may be directly identified from the disks by the other storage nodes.

In the exemplary storage system 30, a monitoring and management module may be installed in the storage node to be responsible for monitoring status of local storage and the other server. When a JBOD is overall abnormal or a certain disk on a JBOD is abnormal, data reliability is ensured by the redundant storage mode. When a server fails, the monitoring and management module in the storage node of another pre-set server will identify locally and take over the disks previously managed by the storage node of the failed server, according to the data on the disks. The storage services previously provided by the storage node of the failed server will also be continued on the storage node of the new server. At this point, a new global storage pool structure with high availability is achieved.

It can be seen that the exemplary storage system 30 provides a storage pool that supports multi-nodes control and global access. In terms of hardware, multiple servers are used to provide the services for external user, and the JBODs are used to accommodate the disks. Each of the JBODs is respectively connected to two SAS switches, and the two switches are respectively connected to a HBA card of the servers, thereby ensuring that all the disks on the JBODs can be accessed by all the servers. SAS redundant links also ensure high availability on the links.

On the local side of each server, according to the redundant storage technology, disks are selected from each JBOD to form the redundant storage mode, to avoid the data unable to be accessed due to the failure of one JBOD. When a server fails, the module that monitors the overall state may schedule another server to access the disks managed by the storage node of the failed server through the SAS channels, to quickly take over the disks previously managed by the failed server and achieve the global storage pool with high availability.

Although it is illustrated as an example in FIG. 3 that the JBODs may be used to accommodate the disks, it should be understood that the embodiment of the present invention shown in FIG. 3 also may apply other storage devices than the JBODs. In addition, the above description is based on the case that one (entire) storage medium is used as one storage block, but also applies to the case that a part of one storage medium is used as one storage block.

It should be understood that, in order not to make the embodiments of the present invention ambiguous, only some critical and unnecessary techniques and features are described, and some features that can be achieved by those skilled in the art may not described.

The above description is merely preferable embodiments of the present invention and is not intended to limit the scope of the present invention, any amendment or equivalent replacement, etc., within the spirit and the principle of the present invention, should be covered in the protection scope of the present invention.

## Claims

1. A storage system, comprising :
a storage network;
at least two storage nodes, connected to the storage network; and
at least one storage device, connected to the storage network, each storage device comprising at least one storage medium;
wherein, the storage network is configured to enable each of the at least two storage node to access all the storage mediums without passing through another storage node of the at least two storage nodes.

2. The storage system of claim 1, wherein all the storage mediums included in the storage system constitute a storage pool which is divided into at least two storage areas, and each storage node is responsible for managing zero or more of the at least two storage areas.

3. The storage system of claim 1, further comprising: a storage control node, connected to the storage network for determining storage areas managed by each of the at least two storage nodes;
or, the storage node comprising: a storage allocation module, adapted for determining storage areas managed by each of the at least two storage nodes.

4. The storage system of claim 1, wherein each of the at least two storage nodes corresponds to one or more computing nodes, and each of the at least two storage nodes and the computing nodes corresponding to the each of the at least two storage nodes are in one same server.

5. The storage system of claim 4, wherein the storage node is a virtual machine of the server, a container, or a module running directly on a physical operating system of the server;
and/or, the computing node is a virtual machine of the server, a container, or a module running directly on a physical operating system of the server.

6. The storage system of claim 5, wherein the virtual machine is built through one of following virtualization technologies: KVM, Zen, VMware, and Hyper-V;
and/or, the container is built through one of following container technologies: Docker, Rockett, Odin, Chef, LXC, Vagrant, Ansible, Zone, Jail and Hyper-V.

7. The storage system of claim 3, wherein each of the at least two storage nodes is set to read and write only the storage areas managed by the each of the at least two storage nodes;
or, each of the at least two storage nodes is set to write only the storage areas managed by the each of the at least two storage nodes, but be able to read all storage areas;
or, each of the at least two storage nodes is set that the storage areas managed by the each of the at least two storage nodes can be taken over by one or more of other storage nodes of the at least two storage nodes.

8. The storage system of any one of claims 1 to 7, wherein the storage network includes at least one storage switching device, and the at least two storage nodes and all the storage mediums of the at least one storage device are respectively connected with the storage switching device through a corresponding storage channel.

9. The storage system of claim 8, wherein the storage switching device is a SAS (serial attached SCSI) switch or a PCI/e (peripheral component interface-express) switch; the corresponding storage channel is a SAS channel or a PCI/e channel.

10. The storage system of any one of claims 1 to 7, wherein the storage network includes at least two storage switching devices, and each of the at least two storage nodes can be connected with each of the at least one storage medium through any storage switching device.

11. The storage system of claim 10, wherein when any storage switching device or any storage channel connected to one storage switching device fails, the storage node reads and writes the storage mediums through the other storage switching devices.

12. The storage system of any one of claims 1 to 7, wherein each of the at least two storage areas comprises at least two storage blocks, wherein the storage block is one complete storage medium or a part of one storage medium.

13. The storage system of claim 12, wherein the at least two storage blocks are divided into one or more storage groups, and the storage blocks in each of the storage groups store data in a redundant storage mode.

14. The storage system of claim 13, wherein the redundant storage mode comprises a redundant array of independent disks (RAID) mode, an erasure code mode, or a multi-copy mode.

15. The storage system of claim 13, wherein in one storage group, the number of the storage blocks in one same storage device is less than or equal to the redundancy of the redundant storage mode.

16. The storage system of claim 13, wherein in one storage group, the number of the storage blocks located in one storage device is at most one.

17. The storage system of any one of claims 1 to 7, wherein the storage device comprises a JBOD (just a bunch of disks); and/or the storage medium comprises a hard disk, a flash storage, a SRAM (static random access memory), or a DRAM (dynamic random access memory); and/or an interface of the storage medium is a SAS interface, a SATA (serial advanced technology attachment) interface, a PCI/e interface, a DIMM (dual in-line memory module) interface, an NVMe (non-volatile memory express) interface, a SCSI (small computer systems interface), or AHCI(an advanced host controller interface).
